# EUROPÄISCHE PATENTSCHRIFT

(11) **EP 4 385 884 B1**
(45) Veröffentlichungstag und Bekanntmachung des Hinweises auf die Patenterteilung: **29.04.2026**
(21) Anmeldenummer: 22214322.4
(22) Anmeldetag: 16.12.2022
(51) Int. Cl.: B64C 1/20, B64D 11/06

(54) **SITZSCHIENENSYSTEM FÜR EINE KABINE EINES VERKEHRSMITTELS**
SEAT RAIL SYSTEM FOR A CABIN OF A MEANS OF TRANSPORTATION
SYSTÈME DE RAILS DE SIÈGE POUR CABINE DE VÉHICULE DE TRANSPORT

(43) Veröffentlichungstag der Anmeldung: 19.06.2024
(73) Patentinhaber: Airbus Operations GmbH, 21129 Hamburg (DE)
(72) Erfinder: Robrecht, Volker, 21129 Hamburg (DE); Vollmer, Malte, 21129 Hamburg (DE)
(74) Vertreter: LKGLOBAL Partnerschaftsgesellschaft mbB

(56) Entgegenhaltungen:
- US-A1- 2005 211 836
- US-A1- 2019 248 499
- US-A1- 2020 086 966
- US-A1- 2022 380 017
- US-B2- 8 544 796

## Beschreibung

### Technisches Gebiet

Die vorliegende Beschreibung betrifft ein Sitzschienensystem für eine Kabine eines Verkehrsmittels, eine Kabine eines Verkehrsmittels mit mindestens einem darin angeordneten Sitzschienensystem und ein Verkehrsmittel mit einer solchen Kabine.

### Technischer Hintergrund

Zum Anordnen von Passagiersitzen, Kabinenmonumenten und anderen Einbauten in Passagierflugzeugen werden üblicherweise Sitzschienen vorgesehen, die in einen Kabinenfußboden integriert sind. Die Sitzschienen weisen einen Schienenkörper auf, der einen Profilquerschnitt umfasst, an dessen Oberseite ein Aufnahmeprofil zum Aufnehmen von Befestigungselementen angeordnet ist. Beispielsweise weist die Oberseite der Sitzschienen einen Hohlraum mit einer Hinterschneidung auf, wobei entlang der Haupterstreckungsrichtung der Sitzschiene mehrere, aufeinanderfolgende kreisrunde Öffnungen angeordnet sind, die sich in den Hohlraum erstrecken und von einem länglichen Schlitz durchsetzt sind. Aufgrund der frequentierten Nutzung der Kabine sowie durch sich permanent ändernde Umgebungsbedingungen könnten sich Flüssigkeiten in dem Hohlraum ansammeln und dort zu Korrosion führen. Um dies zu verhindern, werden kostenintensive und rostfreie Materialien, wie etwa Titan, verwendet oder es werden besondere Beschichtungsstoffe eingesetzt.

US 2022/380017 A1 richtet sich auf eine Vorrichtung zum Befestigen eines Gegenstandes an einer Befestigungsschiene, insbesondere einer Sitzschiene, in einem Luft- oder Raumfahrzeug. Ein Basisteil weist eine Auflagefläche zum Auflegen auf eine Außenfläche der Schiene und ein Verriegelungselement auf, das entlang einer Vorsprungslinie teilweise aus der Auflagefläche herausragt. Das Basisteil und das Verriegelungselement sind gekoppelt oder zur Kopplung ausgebildet, wobei das Verriegelungselement relativ zum Basisteil entlang der Vorsprungslinie bewegt und in Bezug zum Basisteil gedreht werden kann. Ein Endabschnitt des Verriegelungselements weist einen schwalbenschwanzförmig geformten Spitzenabschnitt auf. Die Vorrichtung umfasst eine Spannvorrichtung zum Spannen des Verriegelungselements gegenüber der Schiene. Eine Anordnung umfasst eine solche Vorrichtung sowie eine Befestigungsschiene mit einem Schienengrundkörper und mehreren Buchsen. Es werden ein Verfahren zur Befestigung eines Gegenstandes und eine Sitzschiene offengelegt.

US 2005/211836 A1 richtet sich auf Geräte und Verfahren zum Koppeln einer Nutzlast an eine Trägerschiene. In einer Ausführungsform umfasst eine Schnittstellenanordnung eine Basis, einen Stützarm und ein Ösenelement. Von der Basis ragen zwei Klemmarme nach außen. Jeder Klemmarm ist so angepasst, dass er durch eine zugehörige Kupplungsöffnung im Eingriffselement geführt werden kann. Die Klemmarme sind relativ zum Eingriffselement zwischen einer ungesicherten Position, in der die Klemmarme aus den Kupplungsöffnungen herausgezogen werden können, und einer gesicherten Position, in der die Klemmarme nicht aus den Kupplungsöffnungen herausgezogen werden können, beweglich. Der Tragarm ist mit der Basis und einer Komponente (z. B. einer Nutzlast) gekoppelt. Das Ösenelement, das die Baugruppe in der gesicherten Position verriegelt, ist zwischen einer ersten Position, in der sich die Klemmarme in der ungesicherten Position befinden, und einer zweiten Position, in der sich die Klemmarme in der gesicherten Position befinden, beweglich.

US 2020/086966 A1 richtet sich auf ein Flugzeugbodensystem umfassend einen Bodenträger, eine Sitzschiene mit einem Basisflansch, wobei der Basisflansch eine Vielzahl von Öffnungen umfasst, wobei die eine oder mehrere der Öffnungen ein rautenförmiges Profil aufweisen, einen Sitzschienenbeschlag, der über das rautenförmige Profil der Vielzahl von Öffnungen der Sitzschiene mit der Sitzschiene verbunden werden kann, und eine erste Bodenplatte. Das Flugzeugbodensystem umfasst außerdem eine Randplatte, die so bemessen und geformt ist, dass sie die erste Bodenplatte mit der Sitzschiene verbinden kann. Darüber hinaus werden auch zugehörige Methoden, Geräte und Apparate bereitgestellt.

US 2019/248499 A1 richtet sich auf Vorrichtungen zur Anpassung von Flugzeugböden und zugehörige Verfahren. Ein Beispielboden eines Flugzeugs umfasst einen Bodenträger, eine Sitzschiene und eine mit der Sitzschiene verbundene Kappe. Die Kappe ist über der Sitzschiene und dem Bodenträger angeordnet. Der Beispielboden umfasst eine mit der Kappe ausgerichtete Bodenplatte.

US 8 544 796 B2 richtet sich auf eine Flugzeugpassagiersitzanordnung umfassend einen Sitzrahmen, auf dem mindestens eine Sitzlehne, eine Sitzfläche und mehrere Sitzbeine montiert sind, sowie mindestens eine Sitzbodenplatte mit darin montierten integrierten Bodenplatten-Sitzschienen, die für die Montage auf einem Flugzeugdeck geeignet ist. Eine Montageschiene wird an einer Seitenwand des Flugzeugrumpfs montiert, und Beinschienenbefestigungen sichern die Sitzbeine lösbar an den Sitzschienen der Bodenplatte und an den Rahmensitzbefestigungen zur Montage des Sitzrahmens an der an der Seitenwand montierten Schiene.

### Beschreibung

Es kann als Aufgabe betrachtet werden, ein Sitzschienensystem vorzuschlagen, bei dem Korrosionseffekte konstruktionsbedingt verhindert werden können.

Diese Aufgabe wird gelöst durch den Gegenstand des unabhängigen Anspruchs 1. Weitere Ausführungsformen ergeben sich aus den abhängigen Ansprüchen sowie aus der folgenden Beschreibung.

Es wird ein Sitzschienensystem für eine Kabine eines Verkehrsmittels vorgeschlagen, aufweisend einen länglichen Schienenkörper mit einer Oberseite und einer Unterseite und einem Profilquerschnitt, mehrere Befestigungselemente, wobei der Schienenkörper an der Oberseite mehrere Öffnungen aufweist, die entlang der Oberseite verteilt sind, wobei der Profilquerschnitt in einer an der Oberseite endenden oberen Hälfte zwei obere laterale Flansche zum Aufnehmen von Fußbodenpaneelen aufweist, wobei die Befestigungselemente eine Aufnahme zum Aufnehmen eines Verbindungsmittels umfassen und dazu ausgebildet sind, in oder an den Öffnungen befestigt zu werden, und wobei der Profilquerschnitt des Schienenkörpers an der Unterseite offen ist.

Das erfindungsgemäße Sitzschienensystem bildet eine Sitzschiene aus, auf der Objekte platzierbar und mittels der Befestigungselemente an ihr befestigbar sind. Eine Sitzschiene, die im Wesentlichen durch den Schienenkörper gebildet wird, ist ein längliches Bauteil, das insbesondere parallel zu einer Längserstreckung der Kabine an einem Fußboden der Kabine positionierbar ist und mechanisch mit einer Struktur des Fahrzeugs gekoppelt wird. Die Sitzschiene dient dazu, Kräfte und Lasten von auf ihr befestigten Objekten in die Struktur des Fahrzeugs einzuleiten.

Im Stand der Technik sind viele unterschiedliche Arten von Sitzschienen bekannt. Erfindungsgemäß ist jedoch eine einfachere Bauart vorgesehen, bei der der Schienenkörper zur Befestigung lediglich mehrere Öffnungen aufweist, deren Öffnungsachsen von der Oberseite zu der Unterseite verlaufen. Die Unterseite des Schienenkörpers ist offen, sodass sich keine Flüssigkeiten im Innern des Schienenkörpers ansammeln können.

Die oberen lateralen Flansche könnten in Form von länglichen, band- oder streifenartigen Elementen realisiert sein. Diese könnten insbesondere parallel zu der Oberseite des Schienenkörpers verlaufen und eine Breite von mehreren Zentimetern aufweisen. Die oberen lateralen Flansche erlauben dadurch das Auflegen eines Randbereichs von Fußbodenpaneelen. Es ist vorstellbar, dass die oberen lateralen Flansche Befestigungsbohrungen aufweisen, die zum Befestigen der Fußbodenpaneele verwendbar sind.

Es ist denkbar, die oberen lateralen Flansche mit einer Lage eines Korrosionsschutzes zu versehen, auf dem die Fußbodenpaneele aufliegen. Beim Entfernen eines Fußbodens in der Kabine wird oft ein als Beschichtung angebrachter Korrosionsschutz der Sitzschiene aufgekratzt, sodass anschließend Korrosion entstehen kann. Mögliche Lagen könnten ein Glasfaserverbundwerkstoff, eine Titanfolie oder eine Schicht eines abriebfesten Lackes umfassen.

Die Oberseite des Schienenkörpers könnte einen Auflageabschnitt aufweisen, der zum Aufnehmen der Einbauten vorgesehen ist, die mit dem Schienenkörper zu verbinden sind. Die Fußbodenpaneele könnten sich bis zu einem Rand des Auflageabschnitts erstrecken und diesen dadurch freihalten. Es ist denkbar, eine Art Platzhalter oder Abdeckung auf den Auflageabschnitt zu legen, um den Auflageabschnitt abzudecken und die daran angrenzenden Fußbodenpaneele zu ergänzen, bzw. eine dazwischen befindliche Lücke zu schließen.

Wie weiter nachfolgend ausgeführt, könnte zum Abdichten des Schienenkörpers ein Abdeckelement vorgesehen sein, um das Abtropfen von Flüssigkeiten in einen darunter liegenden Fracht- oder Passagierraum zu verhindern. Sollte das Sitzschienensystem in einer untersten Ebene des Verkehrsmittels, beispielsweise eines Frachtraums, angeordnet sein und sich kein Frachtraum oder Passagierraum darunter befinden, könnte es weiterhin denkbar sein, dass Flüssigkeiten, die durch die Öffnungen gelangen, durch die Lücke den Schienenkörper einfach durchlaufen, statt sich darin anzusammeln.

Zum Befestigen von Einbauten an dem Schienenkörper können selektiv, d.h. bedarfsweise, Befestigungselemente an den Öffnungen angeordnet werden. Sie stellen Einsätze/Inserts dar, die bevorzugt in die Öffnungen einbringbar und dort befestigbar sind. Die Öffnungen könnten auch ein Gewinde aufweisen oder mit einer Verankerungsmutter ausgestattet sein, die sich unterhalb der Öffnungen befindet. Das Befestigungselement wird dann durch ein Verbindungsmittel bereitgestellt, welches in das Gewinde einschraubbar ist. Weitere Befestigungselemente sind denkbar, die insbesondere mit Verbindungsmitteln komplementär ausgebildet als Schnellverschlüsse fungieren. Diese könnten beispielsweise überwiegend Scherkräfte und zusätzlich auch Zuglasten übertragen.

Beispielsweise könnten die Befestigungselemente an vorbestimmten Positionen angeordnet werden, die für eine Erstausstattung mit Passagiersitzen geeignet sind. Sollte während des Betriebs des Verkehrsmittels bzw. Flugzeugs eine Modifikation der Ausstattung vorgenommen werden, könnten die Befestigungselemente entfernt und an anderen Stellen angeordnet werden oder an ihrem Einbauort verbleiben. Je nach Art und Ausführung der Befestigungselemente kann dies durch zerstörungsfreies Abschrauben oder Herausbohren erfolgen. Die Befestigungselemente weisen Aufnahmen auf, die in Form von Innengewinden, Nuten, Hinterschneidungen oder anderen Mitteln realisierbar sind. Durch das selektive bzw. bedarfsweise Anordnen kann Gewicht eingespart werden. Die Befestigungselemente bzw. die unterhalb der Öffnungen angeordneten Verankerungsmuttern oder anderen, an den Öffnungen angeordneten Komponenten, sind bevorzugt an ihrem unteren Ende geschlossen, sodass bei fehlender Abdeckung ein Durchtreten von Flüssigkeiten durch das Befestigungselement verhindert wird. Werden Befestigungselemente nicht genutzt können sie entfernt oder separat abgedichtet werden.

Das erfindungsgemäße Schienensystem kann einfach hergestellt werden, da kein aufwändiges Profil in einer Schienenkrone notwendig ist. Bei einer üblichen Schienenkrone sind Hinterschneidungen vorgesehen, die schwierig zu beschichten und anschließend zu prüfen sind. Lediglich Öffnungen, d.h. im einfachsten Fall Bohrungen, sind notwendig, um das Anordnen von Befestigungselementen zu erlauben. Der Schienenkörper kann insbesondere als stranggepresstes oder aus abgekanteten Komponenten zusammengesetztes Profilbauteil realisiert sein, das mit Öffnungen versehen wird. Neben der einfachen Vermeidung von sich ansammelnden Flüssigkeiten und der dadurch bedingten Korrosion wird ein Gewichtsvorteil dadurch erzielt, dass Befestigungselemente lediglich an notwendigen Positionen angeordnet werden müssen.

In einer vorteilhaften Ausführungsform weist der Profilquerschnitt an der Unterseite zwei untere laterale Flansche zum Anordnen des Schienenkörpers an Verbindungsträgern auf. Die unteren lateralen Flansche könnten derart an dem Schienenkörper vorgesehen sein, dass sie die unterste Begrenzung des Schienenkörpers bilden oder aufweisen. Die unteren lateralen Flansche könnten auf Verbindungsträgern angeordnet und mit diesen verbunden werden, beispielsweise Querträgern, die sich quer zu einer Längsachse der Kabine erstrecken und parallel und in einem Abstand zueinander angeordnet sind. Die unteren lateralen Flansche können sich lateral von dem Schienenkörper aus lateral nach außen erstrecken und voneinander beabstandet sein. An der Unterseite des Schienenkörpers ist dadurch eine Lücke gebildet, die unterhalb der Öffnungen angeordnet ist.

Der Schienenkörper könnte allerdings auch mit zusätzlichen Winkeln an Querträgern angebracht werden, sodass auf die unteren Flansche verzichtet werden könnte. Der Schienenkörper könnte zum Anordnen an Querträgern jeweils einen entsprechenden Schlitz oder eine entsprechende Ausnehmung aufweisen, an den oder die sich ein Winkel anschließt.

In einer vorteilhaften Ausführungsform umfassen die Befestigungselemente Blindniete, und/oder Verankerungsmuttern und/oder Schnellverschlusselemente, die in oder an den Öffnungen befestigbar sind. Blindniete können in den Öffnungen des Schienenkörpers befestigt werden, indem sie mittels eines Setzwerkzeugs in die Öffnung gesetzt und anschließend verformt werden, sodass sie sich form- und kraftschlüssig mit dem Schienenkörper verbinden. Folglich können bei bereits installiertem Schienenkörper von einer Kabinenseite aus Blindniete leicht nachgerüstet werden und ein Zugriff auf die Unterseite ist hierfür nicht notwendig. Dennoch kann auf der Oberseite eine harmonische Erscheinung bzw. ein sauberes Finish erzeugt werden. Eine Verankerungsmutter könnte jeweils unterhalb der Öffnung vorinstalliert sein, sodass ein Verbindungsmittel von der Kabinenseite aus durch die betreffende Öffnung in die Verankerungsmutter einführbar ist. Die Verankerungsmutter könnte eine nach unten geschlossene Bohrung aufweisen, in der Eingriffsmittel zum Verbinden mit einem Verbindungsmittel angeordnet sein könnten.

In einer vorteilhaften Ausführungsform könnten die Befestigungselemente jeweils ein Innengewinde aufweisen. Das Innengewinde erlaubt das Aufnehmen eines komplementär ausgeformten Außengewindes eines Verbindungsmittels, das in das Innengewinde einbringbar ist. Besonders bevorzugt ist die Kombination aus Innengewinde und Außengewinde selbsthemmend ausgestaltet. Das jeweilige Befestigungselement kann zum Bereitstellen des Innengewindes eine Durchgangsbohrung aufweisen, die sich vollständig durch das betreffende Befestigungselement hindurch erstreckt.

In einer vorteilhaften Ausführungsform könnten die Befestigungselemente auch an einer Innenfläche Umfangsnuten oder andere Ausnehmungen, Vorsprünge oder Profile aufweisen, welche beispielsweise zur Aufnahme eines Kugelsperrbolzens oder anderen, schnell einsetz- oder lösbaren Verbindungsmitteln ausgeführt sind. Dadurch kann eine zuverlässige, hochfeste Verbindung mit dem jeweiligen Befestigungselement und dem Schienenkörper erfolgen.

In einer vorteilhaften Ausführungsform ist die Oberseite streifenartig und flach ausgebildet. Der Schienenkörper kann hierdurch insgesamt sehr einfach gestaltet sein und eine ähnliche Auflagefläche für Objekte bereitstellen, wie herkömmliche Sitzschienen. Je nach Ausführungsform kann die Oberseite an ihren lateralen Rändern abgerundet sein und in vertikale Abschnitte des Profilquerschnitts übergehen. Es sind indes auch andere Varianten denkbar, bei denen der Profilquerschnitt Knicke oder andere, winklige Übergänge umfasst.

In einer vorteilhaften Ausführungsform sind die Öffnungen in einem gleichbleibenden Raster an der Oberseite angeordnet. Das Raster könnte mit dem Raster üblicher Sitzschienen korrespondieren. Die Öffnungsmittelpunkte könnten etwa einen Abstand von einem Zoll (2,54 cm) zueinander aufweisen, wobei auch metrische Abstandsraster durchaus denkbar sind. Das Raster erlaubt eine flexible, variable Anordnung von Einbauten an dem Sitzschienensystem, insbesondere die einfache Realisierung unterschiedlicher Sitzabstände.

In einer vorteilhaften Ausführungsform schließen die oberen Flansche und die Oberseite bündig miteinander ab. Die oberste Oberfläche der oberen Flansche liegt folglich in einer Ebene mit der Oberseite. Damit könnten größere Auflageflächen für größere Einbauten bereitgestellt werden, etwa ein Kabinenmonument oder dergleichen. Andererseits könnten Fußbodenpaneele vollständig über den Schienenkörper gelegt werden, um stellenweise einen geschlossenen Fußboden bereitzustellen, wo keine Sitzschienen notwendig sind. Das Fertigen des Schienenkörpers durch Bereitstellen der vergrößerten Fläche ohne Absätze oder Sprünge an der Oberseite des Schienenkörpers könnte dadurch etwas vereinfacht werden.

Der Schienenkörper weist ein oberes Blech auf, das zumindest die Oberseite ausbildet. Die gesamte Oberseite und gegebenenfalls die oberen lateralen Flansche könnten dann in Form eines einzelnen, streifenartigen Blechs ausgeführt sein, das mit anderen Blechen zum Bereitstellen des Schienenkörpers verbunden wird. Diese Verbindung kann durch Schweißen, Nieten, Schrauben oder andere Verbindungsverfahren erreicht werden. Eine getrennte Fertigung einzelner Teile und ihre anschließende Verbindung kann zusätzlich den Aufwand zur Herstellung des Schienenkörpers senken und die einzelnen Teile besser an ihre Verwendung und die zu erwartenden Lasten und Einbaubedingungen anpassen.

Das obere Blech bildet die oberen Flansche aus. Das Blech kann eine vorbestimmte Materialstärke aufweisen und mit einem entsprechend angepassten unteren Abschnitt des Schienenkörpers verbunden werden. Das Material und die Oberfläche des Blechs könnten sich von dem unteren Abschnitt des Schienenkörpers unterscheiden und besonders korrosionsfest ausgeführt sein.

Der Schienenkörper weist zwei mit dem oberen Blech verbundene untere Bleche auf. Die unteren Bleche könnten, falls vorhanden, die unteren Flansche ausbilden. Die unteren Bleche könnten gebogen und/oder abgewinkelt sein und sich von dem oberen Blech zu der Unterseite erstrecken und lateral nach außen verlaufen. Die unteren Flansche könnten zum Befestigen an Querträgern Befestigungsbohrungen aufweisen.

In einer vorteilhaften Ausführungsform weist das Sitzschienensystem ferner mindestens ein Abdeckelement zum lokalen Abdecken der Oberseite unter oder zwischen aufeinanderfolgenden, mit dem Sitzschienensystem befestigten Einbauten auf. Das Abdeckelement könnte fluiddicht mit der Oberseite verklebt werden, um das Durchtreten von Flüssigkeiten zu verhindern. Das Abdeckelement dient insbesondere dazu, das Schienensystem vor mechanischen und korrosiven Einflüssen an den Stellen zu schützen, an denen keine Verbindung mit Befestigungselementen besteht.

In einer vorteilhaften Ausführungsform ragen die unteren Flansche lateral über die oberen Flansche. Der Schienenkörper könnte folglich an seiner Unterseite eine größere Breite aufweisen als an seiner Oberseite und es wird eine große Auflage- und Verbindungsfläche mit Querträgern erreicht.

In einer vorteilhaften Ausführungsform weist die Oberseite mindestens eine Führungsfeder auf, die sich entlang der Oberseite in einem Abstand von den Öffnungen erstreckt. Der darauf anzuordnende Einbaugegenstand weist eine komplementäre Nut auf, die in die mindestens eine Führungsfeder eingreifen kann. Dadurch kann der Einbaugegenstand leichter positioniert werden.

Die Erfindung betrifft ferner eine Kabine für ein Verkehrsmittel, aufweisend einen Fußboden mit mehreren Fußbodenpaneelen und mindestens einem Sitzschienensystem nach der vorhergehenden Beschreibung.

In einer vorteilhaften Ausführungsform schließt eine oberste Oberfläche der Fußbodenpaneele bündig mit der Oberseite des Schienenkörpers ab. Die oberen lateralen Flansche könnten in einer solchen Ausführungsform einen Versatz zu der Oberseite aufweisen, dessen Höhe der Dicke eines Fußbodenpaneels entspricht.

Die Erfindung betrifft weiterhin ein Verkehrsmittel, aufweisend einen Rumpf mit mindestens einer darin ausgebildeten Kabine nach der vorhergehenden Beschreibung.

### Kurze Beschreibung der Figuren

Nachfolgend wird anhand der beigefügten Zeichnungen näher auf Ausführungsbeispiele eingegangen. Die Darstellungen sind schematisch und nicht maßstabsgetreu. Gleiche Bezugszeichen beziehen sich auf gleiche oder ähnliche Elemente. Es zeigen:
- Fig. 1-4: schematische Darstellungen eines nicht beanspruchten Beispiels eines Schienensystems mit unterschiedlichen Schienenkörpern mit gezogenem bzw. stranggepresstem Profil und einen Fußboden ausbildenden Komponenten.
- Fig. 5-7: schematische Darstellungen eines Schienensystems mit auf Blechformteilen basierenden Schienenkörpern und einen Fußboden ausbildenden Komponenten.
- Fig. 8: eine schematische Darstellung eines vorderen und eines hinteren Beschlags auf einem Schienensystem.
- Fig. 9: eine schematische Darstellung eines Schienenkörpers mit Verankerungsmutter.
- Fig. 10a, 10b, 11: eine schematische Darstellung des vorderen und des hinteren Beschlags einzeln und auf einem Schienensystem.
- Fig. 12: eine schematische Darstellung eines Flugzeugs.

### Detaillierte Beschreibung von Ausführungsbeispielen

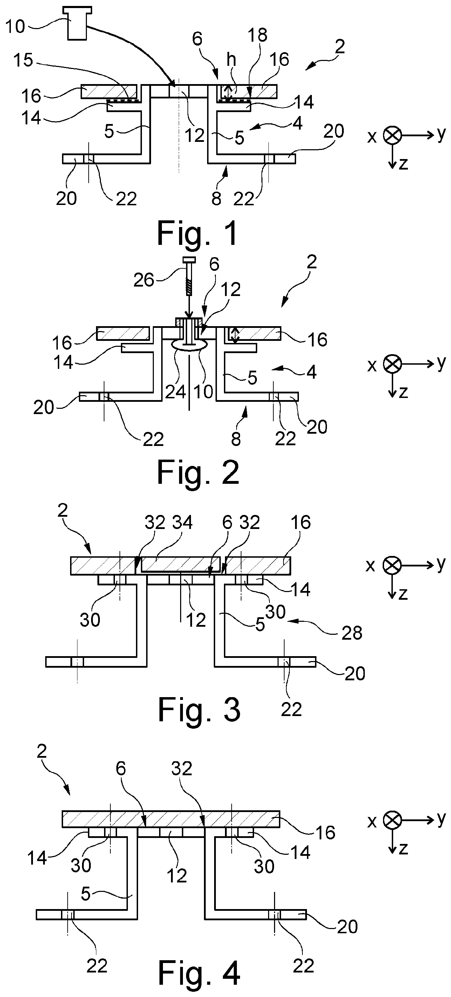

Fig. 1 zeigt ein nicht beanspruchtes Beispiel eines Sitzschienensystems 2 für eine Kabine eines Verkehrsmittels, beispielsweise eines Passagierflugzeugs. Das Sitzschienensystem 2 weist einen Schienenkörper 4 mit einer Oberseite 6 und einer Unterseite 8 auf. In Fig. 1 ist ein Profilquerschnitt des Schienenkörpers 4 dargestellt, der sich entlang einer geraden, in die Zeichnungsebene hinein verlaufenden Linie erstreckt und dadurch einen länglichen Schienenkörper 4 ausbildet. Beispielhaft ist der Profilquerschnitt zu einer X-Z-Ebene (siehe angegebenes Koordinatensystem) spiegelsymmetrisch ausgeführt. Weiterhin sind mehrere Befestigungselemente 10 vorgesehen, welche bedarfsweise mit dem Schienenkörper 4 verbindbar sind. Hierzu weist der Schienenkörper 4 an seiner Oberseite 6 mehrere Öffnungen 12 auf, die entlang der Oberseite 6 verteilt sind und sich in Z-Richtung durch die gesamte Oberseite 6 erstrecken. Die Unterseite 8 des Schienenkörpers 4 ist offen. Eine Grundform des Profilquerschnitts ist ein umgedrehtes U, das zwei Schenkel 5 aufweist, die sich von der Oberseite 6 aus bis zu der Unterseite 8 erstrecken.

An der Oberseite 6 sind zwei obere laterale Flansche 14 vorgesehen, welche parallel zu der exemplarisch flach ausgeführten Oberseite 6 ausgeführt sind und zur Aufnahme von Fußbodenpaneelen 16 dienen. Hierzu weisen die oberen lateralen Flansche 14 einen vertikalen Versatz von der Oberseite 6 in Richtung der Unterseite 8 auf, wobei eine Höhe h des Versatzes ungefähr der Materialstärke eines Fußbodenpaneels 16 entspricht. Die Fußbodenpaneele 16 könnten an den lateralen oberen Flanschen 14 aufgeklebt sein, beispielsweise durch eine Klebeschicht 18 zwischen einer Unterseite des betreffenden Fußbodenpaneels 16 und dem betreffenden oberen lateralen Flansch 14. Die Fußbodenpaneele 16 und die Oberseite 6 schließen dann bündig miteinander ab.

Die hier gezeigten Befestigungselemente 10 sind beispielhaft als Blindniete ausgeführt, die mittels eines Setzwerkzeugs in betreffende Öffnungen 12 eingesteckt und dort befestigt werden können. Es sind zudem Schraubbuchsen, Schnellverschlusselemente oder andere Einsätze frei nach Wunsch des Betreibers des Verkehrsmittels denkbar, sodass beispielsweise die Öffnungen 12 auch ein Innengewinde aufweisen könnten. Wie weiter nachfolgend ausgeführt wird, könnten auch Verankerungsmuttern unterhalb der Oberseite 6, d.h. unterhalb der Öffnungen 12, angeordnet werden und dort jeweils ein Innengewinde bereitstellen.

An der Unterseite 8 des Schienenkörpers 4 sind zwei untere laterale Flansche 20 vorgesehen, die sich in lateraler Richtung (Y) über die oberen lateralen Flansche 14 erstrecken. Die unteren lateralen Flansche 20 dienen zum Auflegen des Schienenkörpers 4 auf einen Querträger (nicht dargestellt), um strukturfest mit dem Verkehrsmittel verbunden zu werden. Hierfür könnten unter anderem Befestigungsbohrungen 22 vorgesehen sein, durch die Bolzen oder dergleichen führbar sind.

Der gezeigte Profilquerschnitt ist beispielhaft durch Extrusion hergestellt. Die Länge des Schienenkörpers 4 ist dadurch beliebig. Nach dem Extrusionsvorgang können die Öffnungen 12 durch Bohren in die Oberseite 6 eingebracht werden. Beispielhaft weisen die oberen Flansche 14 jeweils eine Lage 15 eines Korrosionsschutzes auf, beispielsweise aus einem Glasfaserverbundwerkstoff, einer Titanfolie oder einer Schicht eines abriebfesten Lackes. Sollte das Fußbodenpaneel 16 mit den oberen Flanschen 14 verklebt sein, könnte die entsprechende Klebeschicht 18 auf der Korrosionsschutzlage 15 angeordnet sein.

Fig. 2 zeigt ein nicht beanspruchtes Beispiel des Schienenkörpers 4 mit einem darin angeordneten Befestigungselement 10, das hier als Blindniet ausgebildet ist und mit dem Schienenkörper 4 verquetscht ist. Ein Innengewinde 24 dient der Aufnahme eines Verbindungsmittels 26, das durch eine Befestigungsbohrung des zu befestigenden Einbaugegenstands geführt wird.

In Fig. 3 wird ein nicht beanspruchtes Beispiel eines Schienenkörpers 28 gezeigt, der gegenüber dem Schienenkörper 4 aus Fig. 1 und 2 leicht modifiziert ist. Hier sind die oberen Flansche 14 bündig mit der Oberseite 6 angeordnet, sodass die oberen lateralen Flansche 14 und die Oberseite 6 eine durchgehende Fläche ausbilden. Hier weisen die oberen lateralen Flansche 14 Befestigungsbohrungen 30 auf, die zum Befestigen der Fußbodenpaneele 16 dienen.

Die Fußbodenpaneele 16 erstrecken sich bis zu lateralen Rändern 32 der Oberseite 6, wobei eine zwischen den Fußbodenpaneelen 16 gebildete Lücke durch ein Abdeckelement 34 ergänzt wird. Das Abdeckelement 34 könnte elastisch ausgeführt sein und beispielsweise ein mit den Öffnungen 12 korrespondierendes Noppenmuster aufweisen. Das Abdeckelement könnte dann abgerollt oder ausgefaltet werden, um die Oberseite 6 abzudichten. In diesem Fall ist an der gezeigten Stelle nicht vorgesehen, ein Verbindungsmittel 26 bzw. ein Befestigungselement 10 anzuordnen und es wird stattdessen ein geschlossener Fußboden bereitgestellt.

In Fig. 4 ist ein nicht beanspruchtes Beispiel eines durchgehenden Fußbodenpaneels 16 gezeigt, das sich vollständig über die Oberseite 6 erstreckt. Das Schienensystem 2 kann sich folglich vollständig entlang der Kabine erstrecken und kann je nach Ausstattung der Kabine auch einfach durch ein Fußbodenpaneel 16 abgedeckt werden.

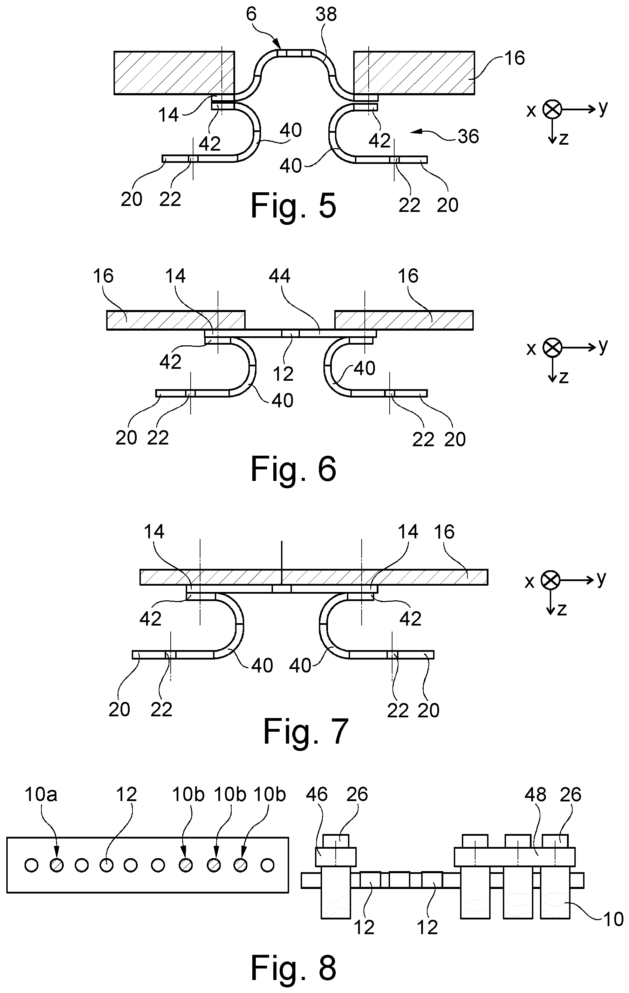

In Fig. 5 ist ein Schienenkörper 36 gezeigt, der aus einem oberen Blech 38 und zwei unteren Blechen 40 ausgebildet ist. Das obere Blech 38 bildet die lateralen oberen Flansche 14 aus, zwischen denen sich die Oberseite 6 befindet, wobei zwischen der Oberseite 6 und den beiden oberen lateralen Flanschen 14 ein doppelt geschwungener Übergangsbereich vorgesehen ist. Die lateralen Flansche 14 und die Oberseite 6 verlaufen parallel zueinander. Die Oberseite 6 ist von den lateralen Flanschen 14 aus nach oben versetzt und schließt bündig mit den Fußbodenpaneelen 16 ab. Der Profilquerschnitt von den oberen lateralen Flanschen 14 aus ist in Richtung Oberseite 6 lediglich beispielhaft um etwa 90° nach oben gekrümmt und krümmt sich anschließend entgegengesetzt dazu in eine horizontale Richtung. Somit wird ein harmonischer, kontinuierlicher und kurvenstetiger Verlauf erreicht. Jegliche anderen, größeren Biegeradien sind denkbar.

Die beiden unteren Bleche 40 weisen jeweils einen Verbindungsabschnitt 42 auf, die mit den oberen lateralen Flanschen 14 korrespondierend ausgeformt sind. Die oberen lateralen Flansche 14 liegen auf den Verbindungsabschnitten 42 auf und lassen sich zusammen mit den Fußbodenpaneelen 16 miteinander verschrauben. Es ist allerdings auch denkbar, dass die oberen lateralen Flansche 14 mit separaten Befestigungsmitteln mit den Verbindungsabschnitten 42 verschraubt werden könnten. Zwischen den unteren lateralen Flanschen 20 und den Verbindungsabschnitten 42 sind die unteren Bleche im Profilquerschnitt halbkreisförmig gekrümmt. Das obere Blech 38 und die unteren Bleche 40 lassen sich leicht fertigen und können durch Auswahl ihrer Abmessungen an Belastungs- und Einbauszenarien angepasst werden.

In Fig. 6 ist ein angepasstes oberes Blech 44 gezeigt, welches eine Ebene ausbildet. Auch hier kann eine Abdeckung 34 angeordnet werden (nicht gezeigt). Alternativ kann, wie in Fig. 7 dargestellt, ein durchgängiges Fußbodenpaneel 16 über das modifizierte Blech 44 verlaufen.

Fig. 8 zeigt in einem linken Teil der Zeichnungsebene eine Draufsicht auf die Oberseite 6 mit den darin angeordneten Öffnungen 12. Hier ist ein vorderes Befestigungselement 10a angedeutet sowie drei hintere Befestigungselemente 10b. Diese sind mit einem vorderen Beschlag 46 und einem hinteren Beschlag 48 verbunden.

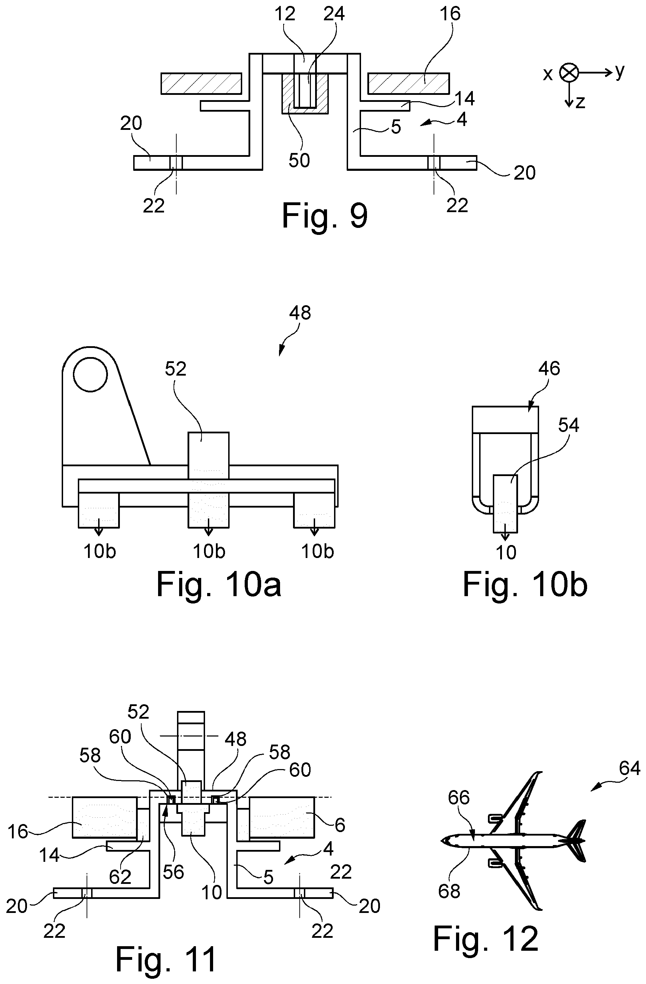

In Fig. 9 wird statt eines Blindniets als Befestigungselement eine Verankerungsmutter 50 dargestellt, die ebenso mit einem Innengewinde 24 ausgestattet ist, in das Verbindungsmittel 26 einschraubbar sind. Ansonsten entspricht der Schienenkörper 4 dem aus Fig. 1 gezeigten Schienenkörper 4.

Fig. 10a zeigt den hinteren Beschlag 48, bei dem ein Schnellverbinder 52 vorgesehen ist, der mit den drei Befestigungselementen 10b verbindbar ist. Fig. 10b zeigt den vorderen Beschlag 46, bei dem ebenso ein Schnellverbinder 54 vorgesehen ist, der indes mit dem Befestigungselement 10a verbindbar ist. Diese Kombination könnte etwa zur Befestigung eines Passagiersitzes eingesetzt werden.

Fig. 11 zeigt den Schienenkörper 4 mit dem darauf angeordneten hinteren Beschlag 48 und einem Schnellverbinder 52, der mit dem Befestigungselement 10 verbunden ist. An einer Unterseite 56 des hinteren Beschlags 48 sind beispielhaft zwei parallel zu einer Längserstreckung des Schienenkörpers 4 verlaufende Nuten 58 angeordnet, mit denen der hintere Beschlag 48 auf Führungselementen 60 geführt werden kann, die beidseitig seitlich und in einem Abstand an den Öffnungen 12 entlanglaufen.

Die Fußbodenpaneele 16 sind weiterhin mit Dichtelementen 62 an dem oberen Flansch 14 angeordnet, wobei diese auch als pastöse Dichtmasse ausgeführt sein könnten.

Schließlich zeigt Fig. 12 ein Flugzeug 64, in dem eine Kabine 66 in einem Rumpf 68 ausgebildet ist, wobei mindestens ein Schienensystem 2 gemäß den vorherigen Ausführungen darin angeordnet ist.

Ergänzend ist darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können, soweit sie in den Rahmen der beigefügten Ansprüche fallen. Bezugszeichen in den Ansprüchen sind nicht als Einschränkung anzusehen.

### Bezugszeichenliste

- 2: Sitzschienensystem
- 4: Schienenkörper
- 5: Schenkel
- 6: Oberseite
- 8: Unterseite
- 10: Befestigungselement
- 12: Öffnung
- 14: oberer lateraler Flansch
- 15: Korrosionsschutz
- 16: Fußbodenpaneel
- 18: Klebeschicht
- 20: Flansch
- 22: Befestigungsbohrung
- 24: Innengewinde
- 26: Verbindungsmittel
- 28: Schienenkörper
- 30: Befestigungsbohrungen
- 32: lateraler Rand
- 34: Abdeckelement
- 36: Schienenkörper
- 38: oberes Blech
- 40: unteres Blech
- 42: Verbindungsabschnitt
- 44: oberes Blech
- 46: vorderer Beschlag
- 48: hinterer Beschlag
- 50: Verankerungsmutter
- 52: Schnellverbinder
- 54: Schnellverbinder
- 56: Unterseite
- 58: Nuten
- 60: Führungselement
- 62: zusätzliches Dichtelement
- 64: Flugzeug
- 66: Kabine
- 68: Rumpf

- h: Höhe des Versatzes

## Patentansprüche

1. Sitzschienensystem (2) für eine Kabine eines Verkehrsmittels, aufweisend:
einen länglichen Schienenkörper (36) mit einer Oberseite (6) und einer Unterseite und einem Profilquerschnitt,
mehrere Befestigungselemente (10, 50),
wobei der Schienenkörper (36) an der Oberseite (6) mehrere Öffnungen (12) aufweist, die entlang der Oberseite (6) verteilt sind,
wobei der Profilquerschnitt in einer an der Oberseite (6) endenden oberen Hälfte zwei obere laterale Flansche (14) zum Aufnehmen von Fußbodenpaneelen (16) aufweist,
wobei der Schienenkörper aus einem oberen Blech und zwei unteren Blechen ausgebildet ist,
wobei das obere Blech die oberen lateralen Flansche (14) ausbildet und die zwei unteren Bleche mit den oberen lateralen Flanschen korrespondierende Verbindungsabschnitte (42) aufweisen,
wobei die oberen lateralen Flansche (14) auf den Verbindungsabschnitten (42) aufliegen und mit diesen verbunden sind,
wobei die Befestigungselemente (10, 50) eine Aufnahme (24) zum Aufnehmen eines Verbindungsmittels (26) umfassen und dazu ausgebildet sind, bedarfsweise in oder an den Öffnungen (12) befestigt zu werden, und
wobei der Profilquerschnitt des Schienenkörpers (36) an der Unterseite (8) offen ist.

2. Sitzschienensystem (2), nach Anspruch 1, wobei die Flansche (14) und die Verbindungsabschnitte (42) zusammen mit Fußbodenpaneelen verbindbar sind.

3. Sitzschienensystem (2), nach Anspruch 1 oder 2,
wobei der Profilquerschnitt an der Unterseite (8) durch die unteren Bleche zwei untere laterale Flansche (20) zum Anordnen des Schienenkörpers (36) an Verbindungsträgern aufweist.

4. Sitzschienensystem (2) nach einem der vorhergehenden Ansprüche,
wobei die Befestigungselemente (10, 50) Blindniete (10) und/oder Verankerungsmuttern (50) und/oder Schnellverschlusselemente umfassen, die in oder an den Öffnungen (12) befestigbar sind.

5. Sitzschienensystem (2) nach Anspruch 4,
wobei die Befestigungselemente (10, 50) jeweils ein Innengewinde (24) aufweisen.

6. Sitzschienensystem (2) nach einem der vorhergehenden Ansprüche,
wobei die Oberseite (6) streifenartig und flach ausgebildet ist.

7. Sitzschienensystem (2) nach einem der vorhergehenden Ansprüche,
wobei die Öffnungen (12) in einem gleichbleibenden Raster an der Oberseite (6) angeordnet sind.

8. Sitzschienensystem (2) nach einem der vorhergehenden Ansprüche,
wobei die oberen Flansche (14) und die Oberseite (6) bündig miteinander abschließen.

9. Sitzschienensystem (2) nach einem der vorhergehenden Ansprüche,
ferner aufweisend mindestens ein Abdeckelement (34) zum lokalen Abdecken der Oberseite (6) unter oder zwischen aufeinanderfolgenden, mit dem Sitzschienensystem (2) befestigten Einbauten.

10. Sitzschienensystem (2) nach Anspruch 3,
wobei die unteren Flansche (14) lateral über die oberen Flansche (14) ragen.

11. Kabine (66) für ein Verkehrsmittel (64), aufweisend einen Fußboden mit mehreren Fußbodenpaneelen (16) und mindestens einem Sitzschienensystem (2) nach einem der vorhergehenden Ansprüche.

12. Kabine (66) nach Anspruch 11,
wobei eine oberste Oberfläche der Fußbodenpaneele (16) bündig mit der Oberseite (6) des Schienenkörpers (4, 28, 36) abschließt.

13. Verkehrsmittel (64), aufweisend einen Rumpf (68) mit mindestens einer darin ausgebildeten Kabine (66) nach einem der Ansprüche 11 bis 12.

## Claims

1. Seat rail system (2) for a cabin of a means of transport, comprising:
an elongate rail body (36) with a top side (6) and a bottom side and a profile cross-section,
multiple fastening elements (10, 50),
wherein the rail body (36) has multiple openings (12) on the top side (6) which are distributed along the top side (6),
wherein the profile cross-section has two upper lateral flanges (14) in an upper half ending at the top side (6) for receiving floor panels (16),
wherein the rail body is formed from an upper metal sheet and two lower metal sheets,
wherein the upper metal sheet forms the upper lateral flanges (14), and the two lower metal sheets have connecting sections (42) corresponding to the upper lateral flanges,
wherein the upper lateral flanges (14) rest on the connecting sections (42) and are connected thereto,
wherein the fastening elements (10, 50) comprise a receptacle (24) for receiving a connecting means (26) and are configured to be fastened in or on the openings (12) as required, and
wherein the profile cross-section of the rail body (36) is open at the bottom side (8).

2. Seat rail system (2) according to claim 1, wherein the flanges (14) and the connecting sections (42) can be connected together with floor panels.

3. Seat rail system (2) according to claim 1 or 2,
wherein the profile cross-section at the bottom side (8) through the lower metal sheets has two lower lateral flanges (20) for arranging the rail body (36) on connecting beams.

4. Seat rail system (2) according to one of the preceding claims,
wherein the fastening elements (10, 50) comprise blind rivets (10) and/or anchoring nuts (50) and/or quick-action fastening elements which can be fastened in or on the openings (12).

5. Seat rail system (2) according to claim 4,
wherein the fastening elements (10, 50) each have an internal thread (24).

6. Seat rail system (2) according to one of the preceding claims,
wherein the top side (6) is designed to be strip-like and flat.

7. Seat rail system (2) according to one of the preceding claims,
wherein the openings (12) are arranged in a constant grid on the top side (6).

8. Seat rail system (2) according to one of the preceding claims,
wherein the upper flanges (14) and the top side (6) terminate flush with one another.

9. Seat rail system (2) according to one of the preceding claims,
further comprising at least one covering element (34) for locally covering the top side (6) below or between successive installations fastened to the seat rail system (2).

10. Seat rail system (2) according to claim 3,
wherein the lower flanges (14) project laterally beyond the upper flanges (14).

11. Cabin (66) for a means of transport (64), comprising a floor with a plurality of floor panels (16) and at least one seat rail system (2) according to one of the preceding claims.

12. Cabin (66) according to claim 11,
wherein an uppermost surface of the floor panels (16) terminates flush with the top side (6) of the rail body (4, 28, 36).

13. Means of transport (64), comprising a fuselage (68) with at least one cabin (66) formed therein according to one of claims 11 to 12.

## Revendications

1. Système de rail de siège (2) pour une cabine d'un moyen de transport, comprenant:
un corps de rail allongé (36) avec un côté supérieur (6) et un côté inférieur et une section transversale du profilé,
une pluralité d'éléments de fixation (10, 50),
dans lequel le corps de rail (36) comprend, au niveau du côté supérieur (6), une pluralité d'ouvertures (12) réparties le long du côté supérieur (6),
dans lequel la section transversale du profilé comprend, dans une moitié supérieure se terminant au niveau du côté supérieur (6), deux brides latérales supérieures (14) pour recevoir des panneaux de plancher (16),
dans lequel le corps de rail est formé à partir d'une tôle supérieure et de deux tôles inférieures,
dans lequel la tôle supérieure forme les brides latérales supérieures (14) et les deux tôles inférieures comprennent des sections de liaison (42) correspondant aux brides latérales supérieures,
dans lequel les brides latérales supérieures (14) reposent sur les sections de liaison (42) et sont reliées à celles-ci,
dans lequel les éléments de fixation (10, 50) comprennent un logement (24) pour recevoir un moyen de liaison (26) et sont conçus pour être fixés en cas de besoin dans ou au niveau des ouvertures (12), et
dans lequel la section transversale du profilé du corps de rail (36) est ouverte au niveau du côté inférieur (8).

2. Système de rail de siège (2) selon la revendication 1, dans lequel les brides (14) et les sections de liaison (42) peuvent être reliées à des panneaux de plancher.

3. Système de rail de siège (2) selon la revendication 1 ou 2,
dans lequel la section transversale du profilé au niveau du côté inférieur (8) à travers les tôles inférieures comprend deux brides latérales inférieures (20) pour agencer le corps de rail (36) sur des poutres de liaison.

4. Système de rail de siège (2) selon l'une quelconque des revendications précédentes,
dans lequel les éléments de fixation (10, 50) comprennent des rivets aveugles (10) et/ou des écrous d'ancrage (50) et/ou des éléments de fermeture rapide qui peuvent être fixés dans ou au niveau des ouvertures (12).

5. Système de rail de siège (2) selon la revendication 4,
dans lequel les éléments de fixation (10, 50) présentent à chaque fois un filetage intérieur (24).

6. Système de rail de siège (2) selon l'une quelconque des revendications précédentes,
dans lequel le côté supérieur (6) est réalisé en forme de bandes et plat.

7. Système de rail de siège (2) selon l'une quelconque des revendications précédentes,
dans lequel les ouvertures (12) sont disposées dans une trame constante au niveau du côté supérieur (6).

8. Système de rail de siège (2) selon l'une quelconque des revendications précédentes,
dans lequel les brides supérieures (14) et le côté supérieur (6) se terminent en affleurement les uns avec les autres.

9. Système de rail de siège (2) selon l'une quelconque des revendications précédentes,
comprenant en outre au moins un élément de recouvrement (34) pour recouvrir localement le côté supérieur (6) sous ou entre des composants successifs fixés au système de rail de siège (2).

10. Système de rail de siège (2) selon la revendication 3,
dans lequel les brides inférieures (14) font saillie latéralement au-delà des brides supérieures (14).

11. Cabine (66) pour un moyen de transport (64), comprenant un plancher avec plusieurs panneaux de plancher (16) et au moins un système de rail de siège (2) selon l'une quelconque des revendications précédentes.

12. Cabine (66) selon la revendication 11,
dans laquelle une surface supérieure des panneaux de plancher (16) se termine en affleurement avec le côté supérieur (6) du corps de rail (4, 28, 36).

13. Moyen de transport (64) comprenant un fuselage (68) avec au moins une cabine (66) formée à l'intérieur, selon l'une des revendications 11 à 12.
